# EUROPÄISCHE PATENTSCHRIFT

(11) **EP 4 561 716 B1**
(45) Veröffentlichungstag und Bekanntmachung des Hinweises auf die Patenterteilung: **30.09.2026**
(21) Anmeldenummer: 23750530.0
(22) Anmeldetag: 27.07.2023
(51) Int. Cl.: A63B 23/10, A63B 21/00, G01N 31/22

(54) **LAGERSTABILE ZUSAMMENSETZUNG UMFASSEND 4-AMINOPHENOL UND DESSEN VERWENDUNG BEI DER BESTIMMUNG VON CANNABINOIDEN**
STORAGE STABLE COMPOSITION COMPRISING 4-AMINOPHENOL AND ITS USE IN THE DETERMINATION OF CANNABINOIDS
COMPOSITION STABLE AU STOCKAGE COMPRENANT DU 4-AMINOPHÉNOL ET SON UTILISATION DANS LA DÉTERMINATION DES CANNABINOÏDES

(30) Priorität: 27.07.2022 AT 5822 U
(43) Veröffentlichungstag der Anmeldung: 04.06.2025
(73) Patentinhaber: Universität Graz, 8010 Graz (AT)
(72) Erfinder: PLÖSCHBERGER, Kurt, 8047 Graz (AT)
(74) Vertreter: Schwarz & Partner Patentanwälte GmbH
(86) Internationale Anmeldenummer: PCT/AT2023/060254
(87) Internationale Veröffentlichungsnummer: WO 2024/020615

(56) Entgegenhaltungen:
- WO-A1-99/54739
- CN-A- 105 036 069
- JIAN-HONG ZHAO ET AL: "Solubilities of p -Aminophenol in Sulfuric Acid + Water + (Methanol, Ethanol, 1-Propanol, 2-Propanol, 1,2-Propanediol, and Glycerin, Respectively) from (292.35 to 348.10) K", JOURNAL OF CHEMICAL AND ENGINEERING DATA., vol. 51, no. 2, 1 March 2006 (2006-03-01), US, pages 376 - 381, XP055597975, ISSN: 0021-9568, DOI: 10.1021/je0502750

## Beschreibung

### TECHNISCHES GEBIET

Die vorliegende Erfindung betrifft lagerstabile Lösungen und deren Verwendung bei der Bestimmung bzw. Identifizierung von Cannabinoiden.

### HINTERGRUND DER ERFINDUNG

Cannabinoide sind eine Gruppe von chemischen Verbindungen, die in der Cannabispflanze vorkommen und verschiedene pharmakologische Wirkungen auf den menschlichen Körper haben. Die Bestimmung von Cannabinoiden ist von großem Interesse für medizinische, forensische und wissenschaftliche Zwecke.

Bisherige Verfahren zur Bestimmung von Cannabinoiden sind oft zeitaufwendig, teuer und erfordern komplexe Analysegeräte. Vor allem im Bereich der Drogenfahndung sind solche Verfahren unpraktikabel, da in vielen Situationen eine rasche Bestimmung bzw. Identifizierung von unerlaubten Cannabinoiden, wie Tetrahydrocannabinol (THC), vonnöten ist. Daher besteht ein Bedarf an einem effizienten, raschen und kostengünstigen Verfahren zur Bestimmung von Cannabinoiden.

In der AT 408279 wird ein Verfahren zum nasschemischen qualitativen und quantitativen Nachweis von Cannabinoiden vorgeschlagen, bei dem ein Probematerial mit einem farbbildenden Reagenz, wie 4-Aminophenol, in Kontakt gebracht wird, woraufhin zur Farbbildung Salze von organischen Säuren dazugegeben werden. Dieses Verfahren ist für eine rasche Bestimmung von Cannabinoiden gut geeignet, weist jedoch den Nachteil auf, dass die Lösung mit dem farbbildenden Reagenz vor allem bei Raumtemperatur nicht lagerstabil ist und sich in kurzer Zeit abreagiert. Dadurch ist der Einsatz solcher Lösungen im Polizeialltag, beispielsweise, nicht möglich.

In Zhao et al. (J. Chem. Eng. Data, 51(2006):376-381) wurde die Löslichkeit von p-Aminophenol (4-Aminophenol) in unterschiedlichen Zusammensetzungen umfassend Schwefelsäure, Wasser sowie einem Alkohol (Methanol, Ethanol, 1-Propanol, 2-Propanol, 1,2-Propandiol oder Glycerin) untersucht.

CN 105 036 069 A beschreibt Nanopartikel aus Gold und Aminophenol zur elektrochemischen Analyse von Wasser, Urin und Serum. Zur Herstellung der Nanopartikel können Salzsäure, Wasser, Ethanol, und Aminophenol vermengt werden.

Es ist daher eine Aufgabe der vorliegenden Erfindung eine lagerstabile Zusammensetzung bereitzustellen, die zur qualitativen und/oder quantitativen Bestimmung von Cannabinoiden geeignet ist.

### ZUSAMMENFASSUNG DER ERFINDUNG

Die vorliegende Erfindung betrifft daher eine lagerstabile Zusammensetzung zur qualitativen und/oder quantitativen Bestimmung von Cannabinoiden umfassend 4-Aminophenol, mindestens eine anorganische Säure und mindestens zwei verschiedene C₁ bis C₃ Alkohole.

Es hat sich überraschenderweise gezeigt, dass Lösungen umfassend 4-Aminophenol durch die Zugabe von anorganischen Säuren stabilisiert werden können. Dadurch ist es möglich lagerstabile Lösungen umfassend 4-Aminophenol bereitzustellen. Herkömmliche Zusammensetzung/Lösungen umfassend 4-Aminophenol sind in deren Lagerfähigkeit durch den Einfluss von Licht, Luft und Wärme erheblich beschränkt. Durch die erfindungsgemäße Zusammensetzung können diese Einflüsse neutralisiert werden.

Durch die Zugabe einer anorganischen Säure zu einer Zusammensetzung umfassend 4-Aminophenol bildet dieses ein Salz, welches in lipophilen Lösungsmitteln, welche zur möglichst schnellen und vollständigen Extraktion der Cannabinoide aus dem Probenmaterial erforderlich sind, eine erniedrigte Löslichkeit aufweist. Durch den Zusatz von C₁ bis C₃ Alkoholen wird der erniedrigten Löslichkeit des 4-Aminophenolsalzes entgegengewirkt, so dass es einerseits zu keinen Ausfällungen aufgrund der schlechten Löslichkeit des Salzes kommt und andererseits eine möglichst effiziente Extraktion der Cannabinoide erhalten bleibt.

Ein weiterer Aspekt der vorliegenden Erfindung betrifft ein Verfahren zur qualitativen und/oder quantitativen Bestimmung von Cannabinoiden in einem Probenmaterial umfassend die Schritte:
a) Inkontaktbringen der erfindungsgemäßen lagerstabilen Zusammensetzung umfassend 4-Aminophenol, mindestens eine anorganische Säure und mindestens zwei verschiedene C₁ bis C₃ Alkohole mit dem Probenmaterial und
b) Zugabe einer alkalischen Lösung zur Entwicklung einer Farbreaktion.

Die erfindungsgemäße lagerstabile Zusammensetzung kann zur qualitativen und/oder quantitativen Bestimmung von Cannabinoiden eingesetzt werden. Dabei wird die Zusammensetzung zunächst mit einem Probenmaterial in Kontakt gebracht und anschließend wird durch Zugabe einer alkalischen Lösung die Farbreaktion entwickelt.

Ein noch weiterer Aspekt der vorliegenden Erfindung betrifft ein Kit zur qualitativen und/oder quantitativen Bestimmung von Cannabinoiden in einem Probenmaterial, umfassend
- ein Behältnis umfassend eine erfindungsgemäße lagerstabile Zusammensetzung umfassend 4-Aminophenol, mindestens eine anorganische Säure und mindestens zwei verschiedene C₁ bis C₃ Alkohole und
- ein Behältnis umfassend eine alkalische Lösung umfassend 0,1 bis 10 M mindestens einer Base, vorzugsweise NaOH und/oder KOH.

### KURZBESCHREIBUNG DER FIGUREN

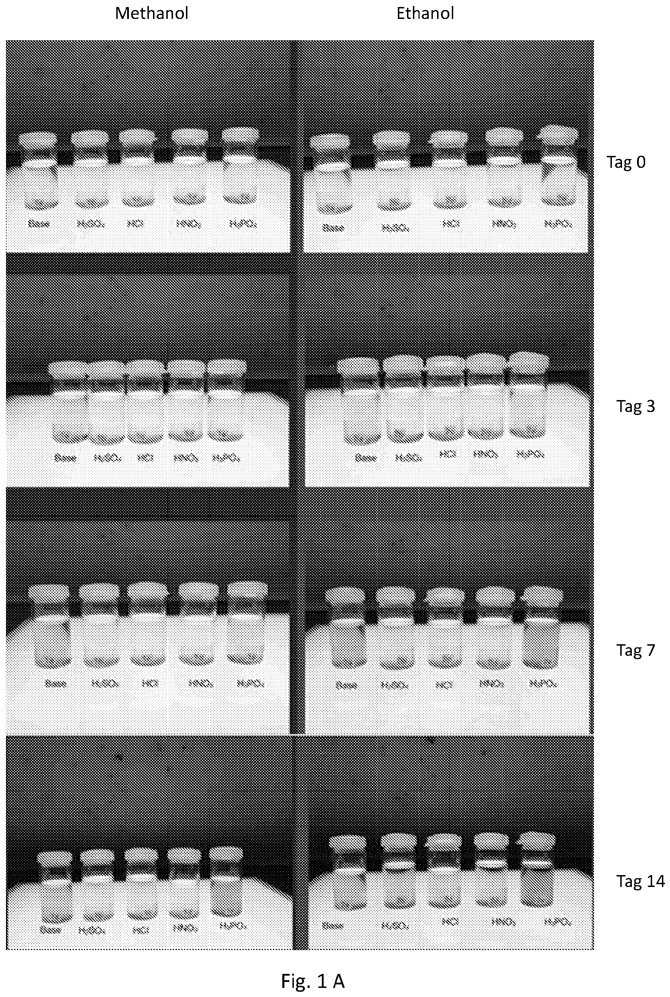

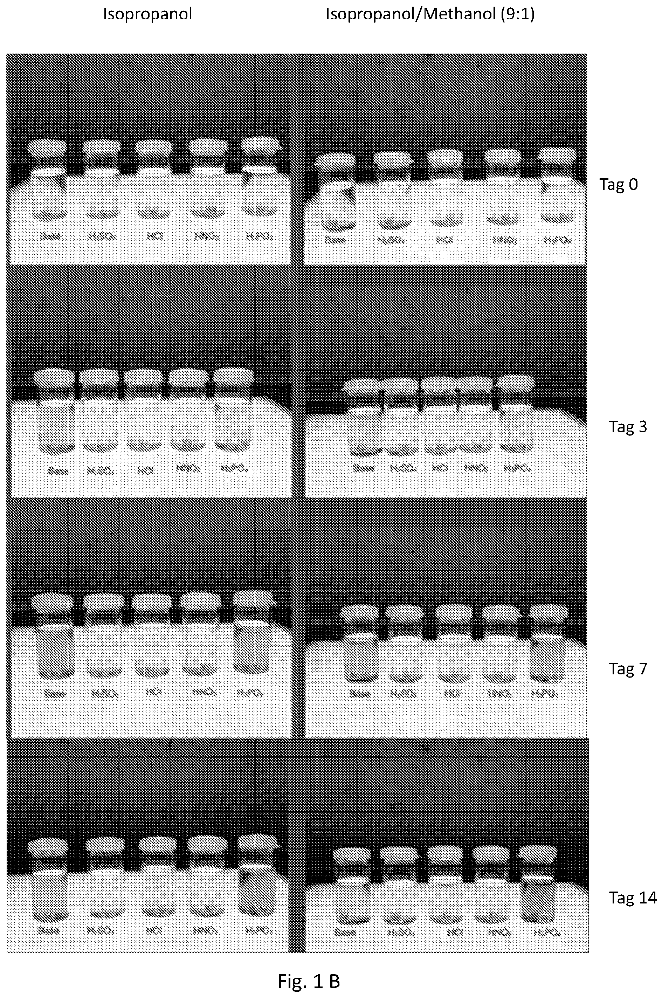

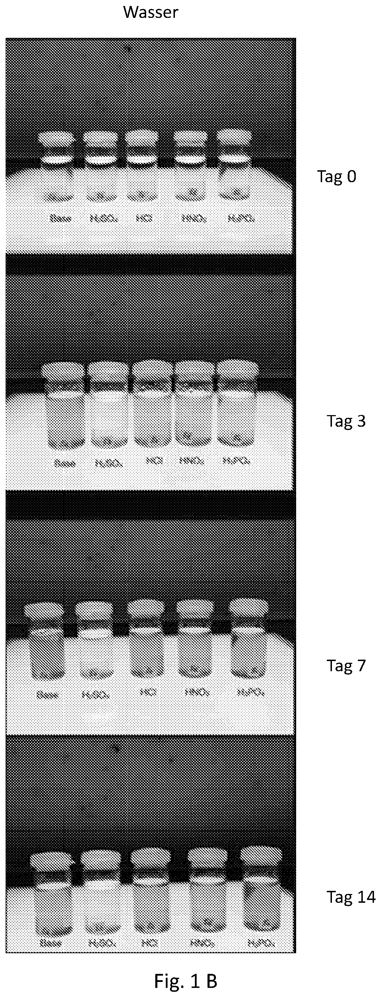

Fig. 1 A bis C zeigen die Verfärbung verschiedener Zusammensetzungen über die Zeit wie in Beispiel 2 beschrieben.

### BESCHREIBUNG DER AUSFÜHRUNGSFORMEN

"Lagerstabil", wie hier verwendet, bedeutet, dass eine Zusammensetzung umfassend 4-Aminophenol, insbesondere das 4-Aminophenol, für zumindest 24 Stunden, vorzugsweise für zumindest 48 Stunden, noch mehr bevorzugt für zumindest 72 Stunden, noch mehr bevorzugt für zumindest 96 Stunden, noch mehr bevorzugt für zumindest 1 Woche, noch mehr bevorzugt für zumindest 4 Wochen, bei Raumtemperatur (ca. 20 °C) stabil ist. In diesem Zeitraum ändert sich die Farbe der Zusammensetzung unwesentlich.

Gemäß einer bevorzugten Ausführungsform der vorliegenden Erfindung weist die mindestens eine anorganische Säure einen pK_{S}-Wert von weniger als 0 auf.

Es hat sich gezeigt, dass anorganische Säuren, die einen pK_{S}-Wert von weniger als 0 aufweisen (bei mehrprotonigen Säuren beträgt der pK_{S1}-Wert vorzugsweise weniger als 0), einen besonders stabilisierenden Effekt auf 4-Aminophenol ausüben. Es konnte experimentell gezeigt werden, dass anorganische Säuren mit einem pK_{S}-Wert bzw. pK_{S1}-Wert von mehr als 0 (z.B. Phosphorsäure) einen geringer stabilisierenden Effekt auf 4-Aminophenol ausüben.

Gemäß einer weiteren bevorzugten Ausführungsform der vorliegenden Erfindung ist die mindestens eine anorganische Säure ausgewählt aus der Gruppe bestehend aus Schwefelsäure, Salzsäure und Salpetersäure, vorzugsweise Schwefelsäure.

Besonders lagerstabil sind Zusammensetzungen, welche Schwefelsäure, Salzsäure und/oder Salpetersäure umfassen, wobei Schwefelsäure besonders bevorzugt ist. Schwefelsäure hat zudem den Vorteil, dass diese auch für Zusammensetzungen geeignet ist, welche keinen C₁ bis C₃ Alkohol umfassen. Salzsäure und Salpetersäure können in der erfindungsgemäßen Zusammensetzung eingesetzt werden, jedoch zeigten diese beiden Säuren eine Herabsetzung der Intensität und/oder Geschwindigkeit der Braunfärbung, wenn die Zusammensetzung zur Bestimmung von Cannabinoiden eingesetzt wird. Dies führt zu einer etwas verlängerten Analysedauer.

Gemäß einer bevorzugten Ausführungsform der vorliegenden Erfindung umfasst die Zusammensetzung 0,001 bis 1 Gew%, vorzugsweise 0,001 bis 0,1 Gew%, vorzugsweise 0,002 bis 0,05 Gew%, vorzugsweise 0,003 bis 0,03 Gew%, der mindestens einen anorganischen Säure. Nach der Zugabe der anorganischen Säure beträgt der pH-Wert der erfindungsgemäßen Zusammensetzung bei Raumtemperatur (ca. 22°C) weniger als 3, vorzugsweise weniger als 2, insbesondere ca. 1.

Gemäß einer bevorzugten Ausführungsform der vorliegenden Erfindung ist der C₁ bis C₃ Alkohol ein einwertiger Alkohol, vorzugsweise ausgewählt aus der Gruppe bestehend aus Methanol, Ethanol und Isopropanol.

Es hat sich gezeigt, dass die Verwendung von mehrwertigen Alkoholen, wie z.B. Glycerin, nachteilig für die weitere Verwendung der erfindungsgemäßen Zusammensetzung ist, da es eine Reaktion von 4-Aminophenol mit einem Cannabinoid inhibiert, so dass evtl. keine Farbänderung sichtbar ist. Zudem ist Glycerin, beispielsweise, aufgrund der relativ hohen Viskosität bei der Handhabung suboptimal. Besonders geeignet sind Methanol, Ethanol, Isopropanol und Mischungen davon.

Die erfindungsgemäße Zusammensetzung umfasst mehrere unterschiedliche Alkohole. Durch die Zugabe von unterschiedlichen Alkoholen wird die Lagerstabilität der erfindungsgemäßen Zusammensetzung nicht negativ beeinflusst. Jedoch ermöglicht die Zugabe verschiedener Alkohole die Eigenschaften der erfindungsgemäßen Zusammensetzung zu verbessern, vor allem wenn es darum geht, einerseits die Extraktionsfähigkeit von Cannabinoiden aus Proben zu verbessern und andererseits die Löslichkeit von 4-Aminophenol in alkoholischen Lösungen zu optimieren. Es hat sich gezeigt, dass insbesondere Methanol und Isopropanol sehr gut diese beiden Eigenschaften vereinen. Daher umfasst die Zusammensetzung besonders bevorzugt Methanol und Isopropanol. Gemäß einer bevorzugten Ausführungsform der vorliegenden Erfindung umfasst die erfindungsgemäße Zusammensetzung Methanol und Isopropanol in einem Verhältnis von 1:9 bis 9:1.

Gemäß einer weiteren bevorzugten Ausführungsform der vorliegenden Erfindung umfasst die Zusammensetzung 0,1 bis 25 Gew%, vorzugsweise 0,5 bis 20 Gew%, noch mehr bevorzugt 1 bis 15 Gew%, Methanol und 75 bis 99 Gew%, vorzugsweise 80 bis 99 Gew%, noch mehr bevorzugt 85 bis 99 Gew%, Isopropanol.

Gemäß einer besonders bevorzugten Ausführungsform der vorliegenden Erfindung umfasst die Zusammensetzung 0,001 bis 1 Gew%, 0,001 bis 0,1 Gew%, vorzugsweise 0,001 bis 0,05 Gew%, 4-Aminophenol.

Ein molares Verhältnis von 4-Aminophenol zur anorganischen Säure in der erfindungsgemäßen Zusammensetzung zwischen 1:1 und 1:5, vorzugsweise zwischen 1:2 und 1:4, insbesondere von ca. 1:3, ist besonders bevorzugt, da dadurch eine vollständige Protonierung des Stickstoffs sichergestellt und somit eine braune Verfärbung auf Dauer verhindert werden kann.

Ein weiterer Aspekt der vorliegenden Erfindung betrifft ein Verfahren zur qualitativen und/oder quantitativen Bestimmung von Cannabinoiden in einem Probenmaterial umfassend die Schritte:
a) Inkontaktbringen der erfindungsgemäßen lagerstabilen Zusammensetzung wie oben beschrieben umfassend 4-Aminophenol, mindestens eine anorganische Säure und mindestens zwei verschiedene C₁ bis C₃ Alkohole mit dem Probenmaterial und
b) Zugabe einer alkalischen Lösung zur Entwicklung einer Farbreaktion.

Die erfindungsgemäße Zusammensetzung zeichnet sich insbesondere durch deren Lagerstabilität aus. Aus diesem Grund ist die Zusammensetzung hervorragend für Verfahren zur qualitativen und/oder quantitativen Bestimmung von Cannabinoiden in einem Probematerial geeignet, da die Zusammensetzung ohne besonderen Aufwand bis zum Einsatz gelagert und transportiert werden kann. Daher kann das erfindungsgemäße Verfahren insbesondere mobil (z.B. durch staatliche Behörden) durchgeführt werden. Durch Vorort-Analysen kann rasch festgestellt werden, ob ein Probenmaterial Cannabinoide umfasst und falls ja, kann gleichzeitig bestimmt werden, ob es sich beim Cannabinoid um THC oder Cannabidiol (CBD) handelt.

Im ersten Schritt wird das Probenmaterial mit der erfindungsgemäßen lagerstabilen Zusammensetzung in Kontakt gebracht. Nach 1 Sekunde bis 10 Minuten wird in einem zweiten Schritt eine alkalische Lösung dazugegeben. Durch die Zugabe der alkalischen Lösung wird der pH-Wert erhöht und das etwaig im Probenmaterial vorhandene Cannabinoid reagiert mit 4-Aminophenol, wodurch sich je nach Cannabinoid die Farbe der Zusammensetzung ändert.

Gemäß einer bevorzugten Ausführungsform der vorliegenden Erfindung wird 1 bis 50 mL, vorzugsweise 1 bis 25 mL, vorzugsweise 1 bis 10 mL, der erfindungsgemäßen Zusammensetzung mit dem Probenmaterial in Kontakt gebracht.

Da bereits geringe Mengen an Probenmaterial ausreichend sind, um das Vorhandensein von Cannabinoiden zu bestimmen, ist auch eine relativ geringe Menge der erfindungsgemäßen Zusammensetzung notwendig, um ein Probenmaterial zu analysieren.

Gemäß einer weiteren bevorzugten Ausführungsform der vorliegenden Erfindung wird 0,01 bis 5000 mg, vorzugsweise 0,1 bis 1000 mg, noch mehr bevorzugt 0,1 bis 500 mg, noch mehr bevorzugt 0,1 bis 100 mg, noch mehr bevorzugt 0,1 bis 50 mg, noch mehr bevorzugt 0,5 bis 10 mg, noch mehr bevorzugt 0,5 bis 5 mg, des Probenmaterials mit der erfindungsgemäßen Zusammensetzung in Kontakt gebracht.

Gemäß einer noch weiteren bevorzugten Ausführungsform der vorliegenden Erfindung ist das Probenmaterial ein Pflanzenteil, vorzugsweise ein Blatt oder eine Blüte, ein Pflanzenöl, Pflanzenharz und/oder Pflanzenextrakt.

Es hat sich erfindungsgemäß gezeigt, dass mit dem erfindungsgemäßen Verfahren unterschiedlichste Probenmaterialien untersucht werden können. Besonders bevorzugt ist pflanzliches Probenmaterial bzw. Probenmaterial, welches pflanzlichen Ursprungs ist. Das Probenmaterial, insbesondere Pflanzenteile, können in (teil)getrockneter Form oder auch wasserhaltig (d.h. frisch geerntet bzw. der Pflanze entnommen) im erfindungsgemäßen Verfahren eingesetzt werden.

Cannabinoide werden von unterschiedlichsten Pflanzen produziert. Daher kann das Probenmaterial u.a. von diesen Pflanzen bzw. von Produkten, die aus diesen Pflanzen hergestellt werden, stammen. Besonders bevorzugt ist jedoch Probenmaterial, welches von Hanfpflanzen stammt, insbesondere Pflanzenteile von Hanfpflanzen.

Gemäß einer bevorzugten Ausführungsform der vorliegenden Erfindung umfasst die alkalische Lösung 0,1 bis 10 M, vorzugsweise 0,5 bis 8 M, noch mehr bevorzugt 1 bis 5 M, mindestens einer Base.

Es hat sich gezeigt, dass NaOH und KOH besonders gut geeignet sind, die Farbreaktion zu induzieren. Daher ist die mindestens eine Base vorzugsweise NaOH und/oder KOH.

Gemäß einer weiteren bevorzugten Ausführungsform der vorliegenden Erfindung werden 0,01 bis 0,5 ml, vorzugsweise 0,05 bis 0,2, noch mehr bevorzugt 0,05 bis 0,1 ml, der alkalischen Lösung zugegeben.

Der pH-Wert der Zusammensetzung aus Schritt a) wird durch die Zugabe in Schritt b) vorzugsweise auf über 8, noch mehr bevorzugt auf über 9, noch mehr bevorzugt auf über 10, gebracht. Durch die Erhöhung des pH-Werts wird die Reaktion zwischen 4-Aminophenol und dem Cannabinoid in Gang gesetzt.

Die Schritte a) und b) des erfindungsgemäßen Verfahrens werden vorzugsweise in einem transparenten, vorzugsweise farblosen, Proberöhrchen durchgeführt.

Die Verwendung derartiger Proberöhrchen, die jegliche Form aufweisen können, ist besonders vorteilhaft, da dies eine optische Beobachtung der Farbänderung ermöglicht. Bei quantitativen Analysen können die Proberöhrchen in ein Photometer, beispielsweise, eingesetzt werden. Vorzugsweise besteht das Proberöhrchen aus Glas, da bei Kunststoffröhrchen eventuell herausgelöste Weichmacher die Reaktion stören und die Gefäße zur Versprödung führen können. Die Proberöhrchen bestehen daher vorzugsweise aus einem inerten Material, vorzugsweise Glas.

Das Proberöhrchen wird vorzugsweise nach jedem Schritt mindestens einmal geschüttelt, um einerseits Cannabinoide aus dem Probenmaterial effizient herauszulösen und andererseits um eine ausreichende homogene Durchmischung der Lösungen zur ermöglichen.

Das Probenmaterial kann vor Schritt b) entfernt werden. Bei bestimmten Proben (z.B. größere Pflanzenteile), die eine instrumentelle Beurteilung bzw. Messung der Farbänderung beeinflussen könnten, ist dies durchaus ein vorteilhafter Verfahrensschritt. Das Probenmaterial kann beispielsweise durch Abdekantieren oder mit Hilfe von technischen Hilfsmitteln, wie Filter, entfernt werden.

Gemäß einer bevorzugten Ausführungsform der vorliegenden Erfindung weis das Gemisch nach Schritt b) eine violette bis rosa Farbe auf, wenn das Probenmaterial Cannabidiol (CBD) in einer höheren Konzentration umfasst als Tetrahydrocannabinol (THC), und eine blaue bis türkise Farbe, wenn das Probenmaterial Tetrahydrocannabinol (THC) in einer höheren Konzentration umfasst als Cannabidiol (CBD). Die Farbe der Lösung in Anwesenheit von CBD weist eine Wellenlänge von 400 bis 425 nm auf. Die Farbe der Lösung in Anwesenheit von THC weist eine Wellenlänge von 450 bis 475 nm und/oder 490 bis 500 nm auf.

Ein weiterer Aspekt der vorliegenden Erfindung betrifft ein Kit zur qualitativen Bestimmung von Cannabinoiden in einem Probenmaterial, umfassend
- ein Behältnis, vorzugsweise aus Glas, umfassend eine erfindungsgemäße lagerstabile Zusammensetzung umfassend 4-Aminophenol, mindestens eine anorganische Säure und mindestens zwei verschiedene C₁ bis C₃ Alkohole und
- ein Behältnis, vorzugsweise aus Kunststoff wie Polyethylen, umfassend eine alkalische Lösung umfassend 0,1 bis 10 M mindestens einer Base, vorzugsweise NaOH und/oder KOH.

Die vorliegende Erfindung stellt u.a. ein verbessertes Verfahren eines Farbschnelltests zur einfachen qualitativen Bestimmung und Überprüfung verschiedener Hanfsorten im Hinblick auf ihr dominierendes Cannabinoid sowie Produkte, die aus diesen Sorten hergestellt werden dar (wie zum Beispiel Cannabisöl, Cannabisharz, CBD-Ö1, Hanfextrakte etc.).

Der bisherige Stand der Technik ist u.a. in AT 408 279 B von Rausch Peter besonders im Punkt 6 ausführlich dargelegt.

Durch die Erfindung wird die Beschränkung der Lagerfähigkeit durch den Einfluss von Licht, Luft und Wärme erheblich verbessert, wenn nicht überhaupt aufgehoben.

Die vorliegende Erfindung betrifft deshalb u.a. ein verbessertes Verfahren eines Farbschnelltests zur einfachen qualitativen Bestimmung und Überprüfung verschiedener Hanfsorten im Hinblick auf ihr dominierendes Cannabinoid sowie Bestimmung und Überprüfung von Produkten, die aus diesen Sorten hergestellt werden können (wie zum Beispiel Cannabisöl, Cannabisharz, CBD-Ö1, Hanfextrakte etc.), indem die zu bestimmende Probe mit einem farbbildenden Reagens A versetzt wird und zur Entwicklung der spezifischen Farbreaktion eine Lösung B zugegeben wird, wobei

Reagens A aus folgenden Komponenten besteht bzw. folgende Komponenten umfasst:
90% Isopropanol
10% Methanol
0,001-0,05% 4-Aminophenol
und dadurch gekennzeichnet:
0,003-0,03% konzentrierte Schwefelsäure

Reagens B aus folgenden Komponenten besteht bzw. folgende Komponenten umfasst:
1-5 M wässrige NaOH
wobei die entstehende Farbe nach ca. 30 Sekunden zur Identifizierung der Hanfsorte im Hinblick auf ihr dominierendes Cannabinoid herangezogen werden kann.

Die ursprünglich farblose Lösung A verfärbte sich besonders unter dem Einfluss von Licht, Wärme und Luft innerhalb von wenigen Wochen braun. Dadurch musste sie immer gut verschlossen, dunkel und gekühlt gelagert werden, wodurch aber eine längerfristige Verfärbung auch nicht gänzlich zu verhindern war, was letztlich mit zunehmender Lagerdauer zu Unsicherheiten, Fehlbestimmungen, oder überhaupt zur Unbrauchbarkeit führte.

Infolge der Überführung des 4-Aminophenols in das entsprechende Salz der anorganischen Säure, insbesondere Sulfat, durch Zugabe einer anorganischen Säure, insbesondere Schwefelsäure, wird die Stabilität wesentlich erhöht und die Zersetzung dieser Lösung verhindert, wodurch keine braune Verfärbung entsteht und eine längerfristige Stabilität sowie Lagermöglichkeit bei Raumtemperatur ohne Lichtschutz gegeben ist.

Durch die Ausbildung des Salzes von 4-Aminophenol sinkt die Löslichkeit in lipophilen Lösungsmitteln, welche aber zur möglichst schnellen und vollständigen Extraktion der Cannabinoide aus dem Pflanzenmaterial erforderlich ist. Dieser erniedrigten Löslichkeit wird mit einem Zusatz von 10% Methanol zum Extraktionsmittel Isopropanol entgegengewirkt, so dass es einerseits zu keinen Ausfällungen aufgrund der schlechten Löslichkeit des Salzes kommt und andererseits eine möglichst effiziente Extraktion der Cannabinoide erhalten bleibt. Der Test soll im Bedarfsfall rasch Klarheit verschaffen, ob eine illegale Cannabis-Sorte (erhöhter Wert an THC) vorliegt oder nicht. Der Test kann problemlos mobil innerhalb von Minuten ohne chemisches Fachwissen durchgeführt werden und ist bei sachgemäßer Anwendung praktisch ungefährlich. Allerdings kann mit diesem Farbschnelltest nicht zwischen Hanfsorten über und unter 0,3% delta-9-THC unterschieden werden. Auch die Zuordnung zu einer bestimmten dem EU-Sortenkatalog unterliegenden Hanfsorte ist nicht möglich.

### BEISPIELE

### Beispiel 1

Ca. 20 mg einer zu bestimmenden Hanfsorte bestehend aus üblicherweise im Handel legal oder illegal vertriebenen Blüten (sog. "buds") und zerkleinerte Blätter wurden in einem 5 ml Probengefäß aus Glas mit ca. 3 ml Reagenzlösung A (90% Isopropanol, 10% Methanol, 0,001-0,05% 4-Aminophenol, 0,003-0,03% konzentrierte Schwefelsäure) überschichtet, kurz umgeschwenkt und zwecks besserer Ablesbarkeit die überstehende klare Lösung nach ca. 30 Sekunden in ein zweites Glas dekantiert. Darauf wurden 3 Tropfen der Reagenslösung B (1-5 M wässrige NaOH) in das zweite Glas getropft und kurz umgeschwenkt. Nach weiteren ca. 30 Sekunden entwickelte sich eine charakteristische Farbe:
violett-rosa = Hanfsorte, bei der Cannabidiol dominiert (CBD:delta-9-THC > ca. 4:1)
blau-türkis = Hanfsorte, bei der delta-9-Tetrahydrocannabinol dominiert (delta9-THC:CBD>ca.4:1)
braun = Hanfsorte, bei der Cannabigerol dominiert (CBG)
keine bis wenig Farbänderung = Konzentration an allen Cannabinoiden sehr gering oder möglicherweise Nutzhanf versetzt mit Cannabinomimetikum.

Da erfahrungsgemäß jede Hanfsorte verschiedene Cannabinoide ausbildet und es nur auf das Verhältnis und auf die Konzentration der Cannabinoide im Hinblick auf ihre Legalität ankommt, kann die Farbe als ein Hinweis auf die Legalität sein.

### Beispiel 2: Stabilitätstests

### a) Herstellung der eingesetzten Lösungen

I:
   - 66 mg 4-Aminophenol wurde in 100ml Lösung A (A=Isopropanol:Methanol 9:1) gelöst
   - 1 ml wurde entnommen und auf 10 ml mit Lösung A aufgefüllt
   - 4.5 ml wurde entnommen entnehmen und dann in ein 5 ml Rollrandschnappglas überführt
II:
   - 100µl H₂SO₄ conc. wurde in 10ml Lösung A eingebracht
   - 1 ml wurde entnommen und auf 10ml mit Lösung A aufgefüllt (=Lösung B)
   - 500 µl wurde entnommen und in das Rollrandgläschen zur Lösung 4-Aminophenol dazu pipettiert

Bei einem Volumen von insgesamt 5 ml im Glas betrug die Konzentration c (4-Aminophenol) 27,17 µmol in 5 ml (d.h. 5,43 µmol/ml) und die Konzentration c (H₂SO₄) 93,33 µmol in 5 ml (d.h. 18,66 µmol/ml). Umgerechnet in Gewichtsprozent (Massenprozent):
0.0075 Gew% 4-Aminophenol in der Mischung
0.023 Gew% H₂SO₄ in der Mischung

### b) Einfluss des Lösungsmittels

Um die Eignung geeigneter Alkohole zu testen, wurden analog zu a) I Lösungen hergestellt, bei denen bis auf Reihe 4 das Isoproponal/Methanol Gemisch mit Methanol, Ethanol, Isopropanol und Wasser ausgetauscht wurde:
Reihe 1: Methanol
Reihe 2: Ethanol
Reihe 3: Isopropanol
Reihe 4: Isopropanol:MeOH = 9:1
Reihe 5: Wasser

Die Lösungen wurden 14 Tage bei Raumtemperatur (ca. 22°C) und Tageslicht inkubiert.

Zunächst wurde die Farbänderung und die Bildung von Niederschlag ohne die Zugabe einer anorganischen Säure untersucht. Unmittelbar nach dem Vermischen von 4-Aminophenol mit den entsprechenden Lösungsmitteln (Reihen 1 bis 5) waren alle Lösungen farblos und klar.

In Wasser zersetzte sich 4-Aminophenol, wurde sehr schnell braun, ein Niederschlag bildete sich bereits nach 3 Tagen. In Methanol und Ethanol war eine Farbänderung nach 7 Tagen erkennbar. In Isopropanol bzw. Isopropanol/Methanol kam es ebenfalls nach 7 Tagen zu einer Verfärbung der Lösung, wobei diese Färbung am intensivsten war. Die Ergebnisse sind in Fig. 1 A bis C gezeigt (Spalte "Base" enthielt keine anorganische Säure).

### Werte am Fotometer

Die Wellenlängen wurden mit 700 nm und 530 nm ausgewählt, da Braun eine Mischung aus den Farben Grün (490-575nm) und Rot (650-780 nm) ist.

Unmittelbar nach der Herstellung waren alle Lösungen klar und farblos und wiesen einen Absorptions-Wert von 0,000 bis maximal 0,007 AU Absorption auf.

Schon nach dem ersten Tag am färbten sich die Basen immer mehr braun. Für die Wellenlänge 530 nm ergaben sich folgende Werte:

| **Lösungsmittel** | **Methanol** | **Ethanol** | **Isopropanol** | **Wasser** |
|---|---|---|---|---|
| **Tag 0** | 0 | 0 | 0 | 0 |
| **Tag 5** | 0,130 | 0,124 | 0,240 | 0,362 |
| **Tag 14** | 0,209 | 0,253 | 0,548 | 0,321 |

Die Absorptions-Werte bei 700 nm zeigen die gleiche Tendenz, sind aber wesentlich schwächer ausgeprägt und bewegen sich nur zwischen 0.003 und 0.020 AU. Sie wurden daher nicht weiterverfolgt.

Die meisten Salze, insbesondere die Sulfate in allen Fällen, blieben auch nach 14 Tagen klar und farblos und wiesen nach wie vor Werte von 0.000-0,007 AU auf. Lediglich sämtliche Phosphate wurden braun.

### c) Einfluss der anorganischen Säure

Um den Einfluss von anorganischen Säuren auf die Stabilität von Zusammensetzungen/Lösungen umfassend 4-Aminophenol zu beurteilen, wurden mehrere Säuren getestet:
a) reine Base als Vergleich
b) Schwefelsäure
c) Salzsäure
d) Salpetersäure
e) Phosphorsäure

Dabei wurden Lösungen mit unterschiedlichen Lösungsmitteln (siehe c)) wie unter a) beschrieben hergestellt und mit den entsprechenden Säuren versetzt und für 14 Tage bei Raumtemperatur (ca. 22°C) und Tageslicht inkubiert.

Es zeigt sich, dass bei Säurezusatz die Lösungen stabiler waren. Die 4-Aminophenol Salze waren in Anwesenheit von Alkoholen am stabilsten. Hier gab es praktisch keine Verfärbungen. Beim Nachweis von Cannabinoiden wie in Beispiel 1 beschrieben funktionierten alle Ansätze mit Säuren und Alkoholen hervorragend, nur Isopropanol/Methanol zeigte eine überdurchschnittliche Farbintensität (blau und rosa violett für den Cannabisnachweis). In Wasser war ein Nachweis nicht möglich. Reines Wasser war auch deshalb nicht so gut geeignet, da aufgrund der hohen Oberflächenspannung das Probenmaterial schlecht in die Flüssigkeit einsinkt und somit nicht ausreichend benetzt wurde. Zudem lösen sich Cannabinoide sehr schlecht bis gar nicht im reinen Wasser. Haltbarkeit bei Wasser im Hinblick auf die Mikrobiologie ist ebenfalls zu hinterfragen.

Insgesamt zeigte Schwefelsäure die besten Ergebnisse da in sämtlichen Zusammensetzungen umfassend Schwefelsäure auch am 14. Tag noch keine Verfärbung festzustellen war. Zusammensetzungen mit Phosphorsäure sind stabiler als jene ohne Säure (ohne Säurezugabe kam es bereits am Tag 3 zu Verfärbungen), jedoch nach Tag 7 war in Anwesenheit von Phosphorsäure eine leichte Verfärbung sichtbar (bei den anderen Säure konnte hingegen nach Tag 7 keine Verfärbung festgestellt werden).

Die Ergebnisse sind in Fig. 1 A bis C dargestellt.

### c) Einfluss der Base bei der Farbreaktion

Die Farbreaktion zwischen 4-Aminophenol und einem Cannabinoid erfolgt bei einem pH-Wert von über 7. Daher wird beim erfindungsgemäßen Verfahren eine Base zur 4-Aminophenol Lösung gegeben, um den pH-Wert zu erhöhen.

Folgende Basen wurden getestet:
a) NaOH
b) KOH
c) Borax
d) Natriumcarbonat
e) Natriumhydrogencarbonat

Am besten geeignet waren KOH und NaOH, da mit diesen die höchste Farbintensität erzielt werden konnte. Alle anderen schwächeren Basen führten zu keiner bzw. stark reduzierten Farbbildung in der Lösung.

## Patentansprüche

1. Lagerstabile Zusammensetzung zur qualitativen und/oder quantitativen Bestimmung von Cannabinoiden umfassend 4-Aminophenol, mindestens eine anorganische Säure und mindestens zwei verschiedene C₁ bis C₃ Alkohole.

2. Zusammensetzung gemäß Anspruch 1, **dadurch gekennzeichnet, dass** die mindestens eine anorganische Säure einen pK_{S}-Wert von weniger als 0 aufweist.

3. Zusammensetzung gemäß Anspruch 1 oder 2, **dadurch gekennzeichnet, dass** die mindestens eine anorganische Säure ausgewählt ist aus der Gruppe bestehend aus Schwefelsäure, Salzsäure und Salpetersäure, vorzugsweise Schwefelsäure ist.

4. Zusammensetzung gemäß einem der Ansprüche 1 bis 3, **dadurch gekennzeichnet, dass** die Zusammensetzung 0,001 bis 1 Gew%, vorzugsweise 0,001 bis 0,1 Gew%, vorzugsweise 0,002 bis 0,05 Gew%, vorzugsweise 0,003 bis 0,03 Gew%, der mindestens einen anorganischen Säure umfasst.

5. Zusammensetzung gemäß einem der Ansprüche 1 bis 4, **dadurch gekennzeichnet, dass** der C₁ bis C₃ Alkohol ein einwertiger Alkohol ist, vorzugsweise ausgewählt aus der Gruppe bestehend aus Methanol, Ethanol und Isopropanol.

6. Zusammensetzung gemäß einem der Ansprüche 1 bis 5, **dadurch gekennzeichnet, dass** die Zusammensetzung Methanol und Isopropanol, vorzugsweise 0,1 bis 25 Gew% Methanol und 75 bis 99 Gew% Isopropanol, umfasst.

7. Zusammensetzung gemäß einem der Ansprüche 1 bis 6, **dadurch gekennzeichnet, dass** die Zusammensetzung 0,001 bis 1 Gew%, 0,001 bis 0,1 Gew%, vorzugsweise 0,001 bis 0,05 Gew%, 4-Aminophenol umfasst.

8. Verfahren zur qualitativen und/oder quantitativen Bestimmung von Cannabinoiden in einem Probenmaterial umfassend die Schritte:
a) Inkontaktbringen der Zusammensetzung gemäß einem der Ansprüche 1 bis 7 mit dem Probenmaterial und
b) Zugabe einer alkalischen Lösung zur Entwicklung einer Farbreaktion.

9. Verfahren gemäß Anspruch 8, **dadurch gekennzeichnet, dass** 1 bis 50 mL, vorzugsweise 1 bis 25 mL, vorzugsweise 1 bis 10 mL, der Zusammensetzung gemäß einem der Ansprüche 1 bis 7 mit dem Probenmaterial in Kontakt gebracht wird.

10. Verfahren gemäß Anspruch 8 oder 9, **dadurch gekennzeichnet, dass** 0,01 bis 5000 mg, vorzugsweise 0,1 bis 1000 mg, vorzugsweise 1 bis 500 mg, des Probenmaterials mit der Zusammensetzung gemäß einem der Ansprüche 1 bis 7 in Kontakt gebracht wird.

11. Verfahren gemäß einem der Ansprüche 8 bis 10, **dadurch gekennzeichnet, dass** das Probenmaterial ein Pflanzenteil, vorzugsweise ein Blatt oder eine Blüte, ein Pflanzenöl, Pflanzenharz und/oder Pflanzenextrakt ist, wobei der Pflanzenteil vorzugsweise von einer Hanfpflanze stammt.

12. Verfahren gemäß einem der Ansprüche 8 bis 11, **dadurch gekennzeichnet, dass** die alkalische Lösung 0,1 bis 10 M, vorzugsweise 0,5 bis 8 M, vorzugsweise 1 bis 5 M, mindestens einer Base umfasst, wobei die mindestens eine Base vorzugsweise NaOH und/oder KOH ist.

13. Verfahren gemäß einem der Ansprüche 8 bis 12, **dadurch gekennzeichnet, dass** 0,01 bis 0,5 ml, vorzugsweise 0,05 bis 0,2, noch mehr bevorzugt 0,05 bis 0,1 ml, der alkalischen Lösung zugegeben werden.

14. Verfahren gemäß einem der Ansprüche 8 bis 13, **dadurch gekennzeichnet, dass** das Gemisch nach Schritt b) eine violette bis rosa Farbe aufweist, wenn das Probenmaterial Cannabidiol in einer höheren Konzentration umfasst als Tetrahydrocannabinol, und eine blaue bis türkise Farbe aufweist, wenn das Probenmaterial Tetrahydrocannabinol in einer höheren Konzentration umfasst als Cannabidiol.

15. Kit zur qualitativen Bestimmung von Cannabinoiden in einem Probenmaterial, umfassend ein Behältnis umfassend eine Zusammensetzung gemäß einem der Ansprüche 1 bis 7 und ein Behältnis umfassend eine alkalische Lösung gemäß Anspruch 12.

## Claims

1. A storage-stable composition for the qualitative and/or quantitative determination of cannabinoids, comprising 4-aminophenol, at least one inorganic acid and at least two different C₁ to C₃ alcohols.

2. The composition according to claim 1, **characterized in that** the at least one inorganic acid has a pK_{S}-value of less than 0.

3. The composition according to claim 1 or 2, **characterized in that** the at least one inorganic acid is selected from the group consisting of sulphuric acid, hydrochloric acid and nitric acid, and is preferably sulphuric acid.

4. The composition according to any one of claims 1 to 3, **characterized in that** the composition comprises 0.001 to 1 wt%, preferably 0.001 to 0.1 wt%, more preferably 0.002 to 0.05 wt%, and most preferably 0.003 to 0.03 wt%, of the at least one inorganic acid.

5. The composition according to any one of claims 1 to 4, **characterized in that** the C₁ to C₃ alcohol is a monohydric alcohol, preferably selected from the group consisting of methanol, ethanol and isopropanol.

6. The composition according to any one of claims 1 to 5, **characterized in that** the composition comprises methanol and isopropanol, preferably 0.1 to 25 wt% of methanol and 75 to 99 wt% of isopropanol.

7. The composition according to any one of claims 1 to 6, **characterized in that** the composition comprises 0.001 to 1 wt%, 0.001 to 0.1 wt%, preferably 0.001 to 0.05 wt%, of 4-aminophenol.

8. A method for the qualitative and/or quantitative determination of cannabinoids in a sample material, comprising the steps:
a) contacting the composition according to any one of claims 1 to 7 with the sample material; and
b) adding an alkaline solution to develop a colour reaction.

9. The method according to claim 8, **characterized in that** 1 to 50 mL, preferably 1 to 25 mL, more preferably 1 to 10 mL, of the composition according to any one of claims 1 to 7 is brought into contact with the sample material.

10. The method according to claim 8 or 9, **characterized in that** 0.01 to 5000 mg, preferably 0.1 to 1000 mg, more preferably 1 to 500 mg, of the sample material is brought into contact with the composition according to any one of claims 1 to 7.

11. The method according to any one of claims 8 to 10, **characterized in that** the sample material is a plant part, preferably a leaf or a flower, a plant oil, plant resin and/or plant extract, wherein the plant part preferably originates from a hemp plant.

12. The method according to any one of claims 8 to 11, **characterized in that** the alkaline solution comprises 0.1 to 10 M, preferably 0.5 to 8 M, more preferably 1 to 5 M, of at least one base, wherein the at least one base is preferably NaOH and/or KOH.

13. The method according to any one of claims 8 to 12, **characterized in that** 0.01 to 0.5 ml, preferably 0.05 to 0.2 ml, more preferably 0.05 to 0.1 ml, of the alkaline solution is added.

14. The method according to any one of claims 8 to 13, **characterized in that** the mixture exhibits a violet to pink colour after step (b) if the sample material comprises cannabidiol in a higher concentration than tetrahydrocannabinol, and exhibits a blue to turquoise colour if the sample material comprises tetrahydrocannabinol in a higher concentration than cannabidiol.

15. A kit for the qualitative determination of cannabinoids in a sample, comprising a container containing a composition according to any one of claims 1 to 7 and a container containing an alkaline solution according to claim 12.

## Revendications

1. Composition stable au stockage pour la détermination qualitative et/ou quantitative des cannabinoïdes, comprenant du 4-aminophénol, au moins un acide inorganique et au moins deux alcools en C₁ à C₃ différents.

2. Composition selon la revendication 1, **caractérisée en ce que** l'au moins un acide inorganique a une valeur de pKa inférieur à 0.

3. Composition selon la revendication 1 ou 2, **caractérisée en ce que** l'au moins un acide inorganique est choisi parmi le groupe constitué de l'acide sulfurique, de l'acide chlorhydrique et de l'acide nitrique, de préférence de l'acide sulfurique.

4. Composition selon l'une quelconque des revendications 1 à 3, **caractérisée en ce que** la composition comprend de 0,001 à 1 % en poids, de préférence de 0,001 à 0,1 % en poids, de préférence de 0,002 à 0,05 % en poids, de préférence de 0,003 à 0,03 % en poids, de l'au moins un acide inorganique.

5. Composition selon l'une quelconque des revendications 1 à 4, **caractérisée en ce que** l'alcool en C₁ à C₃ est un alcool monohydrique, de préférence choisi parmi le groupe constitué du méthanol, de l'éthanol et de l'isopropanol.

6. Composition selon l'une quelconque des revendications 1 à 5, **caractérisée en ce que** la composition comprend du méthanol et de l'isopropanol, de préférence de 0,1 à 25 % en poids de méthanol et de 75 à 99 % en poids d'isopropanol.

7. Composition selon l'une quelconque des revendications 1 à 6, **caractérisée en ce que** la composition comprend de 0,001 à 1 % en poids, de 0,001 à 0,1 % en poids, de préférence de 0,001 à 0,05 % en poids, de 4-aminophénol.

8. Procédé de détermination qualitative et/ou quantitative des cannabinoïdes dans un échantillon, comprenant les étapes suivantes:
a) mise en contact de la composition selon l'une quelconque des revendications 1 à 7 avec l'échantillon, et
b) ajout d'une solution alcaline pour créer une réaction colorée.

9. Procédé selon la revendication 8, **caractérisé en ce que** 1 à 50 mL, de préférence de 1 à 25 mL, de préférence de 1 à 10 mL, de la composition selon l'une quelconque des revendications 1 à 7 sont mis en contact avec l'échantillon.

10. Procédé selon la revendication 8 ou 9, **caractérisé en ce que** 0,01 à 5.000 mg, de préférence de 0,1 à 1.000 mg, de préférence de 1 à 500 mg, de l'échantillon sont mis en contact avec la composition selon l'une quelconque des revendications 1 à 7.

11. Procédé selon l'une quelconque des revendications 8 à 10, **caractérisé en ce que** l'échantillon est une partie de plante, de préférence une feuille ou un pétale, une huile de plante, une résine de plante et/ou un extrait de plante, la partie de plante provenant de préférence d'une plante de chanvre.

12. Procédé selon l'une quelconque des revendications 8 à 11, **caractérisé en ce que** la solution alcaline comprend de 0,1 à 10 M, de préférence de 0,5 à 8 M, de préférence de 1 à 5 M, d'au moins une base, l'au moins une base étant de préférence NaOH et/ou KOH.

13. Procédé selon l'une quelconque des revendications 8 à 12, **caractérisé en ce que** 0,01 à 0,5 ml, de préférence de 0,05 à 0,2, plus préférentiellement de 0,05 à 0,1 ml, sont ajoutés à la solution alcaline.

14. Procédé selon l'une quelconque des revendications 8 à 13, **caractérisé en ce que** le mélange après l'étape b) présente une couleur violette à rose si l'échantillon comprend du cannabidiol à une concentration supérieure à celle du tétrahydrocannabinol, et présente une couleur bleue à turquoise si l'échantillon comprend du tétrahydrocannabinol à une concentration supérieure à celle du cannabidiol.

15. Kit pour la détermination qualitative des cannabinoïdes dans un échantillon, comprenant un récipient comprenant une composition selon l'une quelconque des revendications 1 à 7 et un récipient comprenant une solution alcaline selon la revendication 12.
